Europäisches Patentamt

European Patent Office

Office européen des brevets

(11) Numéro de publication: **0 260 202**
A1

## (12) DEMANDE DE BREVET EUROPEEN

(21) Numéro de dépôt: 87402032.4

(22) Date de dépôt: 11.09.87

(51) Int. Cl.4: **F 16 D 1/12**
B 62 D 1/10, F 16 D 1/08

(30) Priorité: 12.09.86 FR 8612784
07.11.86 FR 8615566

(43) Date de publication de la demande:
16.03.88 Bulletin 88/11

(84) Etats contractants désignés:
AT BE CH DE ES FR GB GR IT LI LU NL SE

(71) Demandeur: GERSTEEN exerçant ses activités sous la dénomination ISODELTA
Zone Industrielle de Chire-en-Montreuil
F-86190 Vouille (FR)

(72) Inventeur: Hallard, Alain François Henri Adrien
3, Chemin des Gris Cisse
F-86170 Neuville de Poitou (FR)

(74) Mandataire: Rinuy, Santarelli
14, avenue de la Grande Armée
F-75017 Paris (FR)

(54) Dispositif d'accouplement en rotation de deux éléments coaxiaux et de réglage de leur position angulaire relative, et volant de direction le comportant.

(57) Dispositif d'accouplement en rotation de deux éléments coaxiaux 6,7 autour d'un axe commun comportant un moyeu 6 solidaire de l'un des éléments et une pièce intermédiaire 5 de liaison en rotation de ce moyeu à l'autre 1 de ces éléments, caractérisé en ce que, le moyeu et la pièce intermédiaire étant attelés axialement l'un à l'autre et la pièce intermédiaire étant adaptée à être calée en rotation sur ledit autre élément, il comporte une vis transversale 15 maintenue longitudinalement dans le moyeu, radialement à distance de l'axe commun, et un écrou 10 engagé sur cette vis qui est attelé à la pièce intermédiaire parallèlement à cette vis.

Fig. 2

EP 0 260 202 A1

## Description

"Dispositif d'accouplement en rotation de deux éléments coaxiaux et de réglage de leur position angulaire relative, et volant de direction le comportant"

La présente invention concerne un dispositif pour régler la position angulaire d'un élément calé en rotation avec un autre élément, par exemple un volant de véhicule automobile assemblé à une colonne de direction.

On connaît déjà un tel dispositif, à réglage grossier, dans lequel un arbre menant est accouplé à un arbre mené au moyen d'une pièce intermédiaire à deux cônes fixée sur l'arbre mené par deux vis axiales. L'ensemble est ensuite bloqué par un écrou monté sur l'arbre menant.

Il en est également ainsi dans le brevet Européen 0 148 794 (ECKENDORF) qui enseigne un dispositif permettant le réglage de la position angulaire d'un volant de direction automobile assemblé à une colonne de direction au moyen d'un dispositif intermédiaire.

La modification de la position angulaire du volant est obtenue, après enlèvement de l'écrou de blocage de la colonne de direction, par la rotation d'une bague qui entraîne en translation un système à pans hélicoïdaux, lequel permet le déplacement angulaire du volant.

On remarque que les systèmes ci-dessus permettent la modification de la position angulaire du volant par rapport à la colonne de direction sans toutefois assurer pendant l'opération la retenue en translation du volant.

S'agissant de la possibilité de régler la position angulaire d'un volant sur une colonne de direction, on conçoit aisément que l'assemblage des éléments en cause ne doit pas être démonté pendant l'opération de réglage.

D'autre part, il est toujours ennuyeux que le système permettant le réglage angulaire nécessite pour son opération un outillage spécifique n'existant pas dans le commerce.

La présente invention vise à remédier aux inconvénients énoncés ci-dessus à l'aide d'un dispositif, de réalisation simple et de mise en place commode, apte à régler angulairement, de manière progressive, la position angulaire d'un volant de véhicule automobile calé sur une colonne de direction sans que le désaccouplage de ces deux éléments soit possible pendant l'opération de réglage, et qui permette l'utilisation des outils du commerce.

L'invention propose ainsi un dispositif d'accouplement en rotation de deux éléments coaxiaux autour d'un axe commun comportant un moyeu solidaire de l'un des éléments et une pièce intermédiaire de liaison en rotation de ce moyeu à l'autre de ces éléments, caractérisé en ce que, le moyeu et la pièce intermédiaire étant attelés axialement l'un à l'autre et la pièce intermédiaire étant adaptée à être calée en rotation sur ledit autre élément, il comporte une vis transversale maintenue longitudinalement dans le moyeu, radialement à distance de l'axe commun, et un écrou engagé sur cette vis qui est attelé parallèlement à cette vis à la pièce intermédiaire.

De ce fait, après déblocage du volant de la colonne, on peut par l'intermédiaire de la vis régler la position angulaire du volant sans démontage de l'écrou de blocage.

Cette opération peut donc être réalisée en toute sécurité, même si le véhicule est en mouvement, avec un outillage du commerce.

Selon des dispositions préférées de l'invention qui seront avantageusement combinées :
- la vis est montée dans le moyeu avec un débattement latéral transversalement à l'axe commun;
- l'écrou est un cylindre d'axe parallèle à l'axe commun, coulissant en rotation dans un logement cylindrique de la pièce intermédiaire traversé par un alésage dans laquelle la vis est engagée avec jeu;
- la pièce intermédiaire comporte un manchon cannelé intérieurement, destiné à être calé en rotation sur une portion cannelée dudit autre élément, prolongé radialement par une oreille dans laquelle est ménagé ledit logement;
- le logement est un alésage traversant axialement ladite oreille;
- le moyeu ou la pièce intermédiaire comporte une portion tronconique adaptée à être pressée axialement contre une portée tronconique dudit autre élément;
- la portion tronconique est d'un angle plus aigü que l'angle de la portée tronconique.

Selon d'autres dispositions avantageuses de l'invention dont certaines peuvent se combiner avec les précédentes :
- la vis est solidaire du moyeu;
- l'écrou est engagé entre des portées, transversales à la vis, ménagées sur la pièce intermédiaire, le long desquelles il peut glisser;
- la pièce intermédiaire comporte un manchon destiné à être calé en rotation sur ledit autre élément, prolongé radialement par deux ailes parallèles échancrées adaptées à venir de part et d'autre de l'écrou;
- l'écrou est un écrou à 6 pans;
- l'écrou est une molette auquel cas le réglage angulaire peut se faire à la main.

L'invention propose également une variante adaptée à assurer en plus, de façon indépendante, un réglage longitudinal. Selon cette variante, la pièce intermédiaire comporte un manchon élastique fendu entourant ledit autre élément et engagé dans une pièce élastique en U, faisant partie du moyeu, la vis traverse les extrémités des branches de cette pièce en U, et un écrou de serrage est engagé sur cette vis à l'opposé de la tête de cette dernière : de la sorte un vissage de cet écrou de serrage sur la vis provoque une compression radiale de la pièce en U sur le manchon fendu et donc une compression radiale de ce dernier sur ledit autre élément. Le dispositif d'accouplement est ainsi fixé axialement en une position quelconque choisie sur cet autre élément.

De manière préférée, par comparaison aux variantes précédentes :

- la pièce intermédiaire qui comporte un manchon cannelé intérieurement a été fendue sur le côté de manière à lui donner une certaine élasticité;
- le moyeu ne comporte plus de portion tronconique adaptée à être pressée axialement contre une autre portion tronconique de la colonne de direction;
- de plus ce moyeu est lui aussi fendu latéralement le long d'au moins une branche de U de manière à lui donner une certaine élasticité.

Ces modifications permettent d'assurer, après le réglage de la position angulaire de l'élément calé en rotation par rotation de la vis, le blocage dudit élément, sur une colonne de direction par exemple, par serrage d'un écrou sur la vis de réglage. Ce serrage et ce blocage sont possibles du fait de l'élasticité des deux éléments moyeu et pièce intermédiaire.

De ce fait il est possible d'assurer non seulement un réglage angulaire mais aussi un réglage longitudinal dans la mesure où la colonne de direction est cannelée sur une longueur assez importante.

L'invention propose également un volant de direction comportant un moyeu relié à un cercle destiné à être manipulé par un conducteur et une pièce intermédiaire de liaison à une extrémité cannelée d'une colonne de direction, ce moyeu et cette pièce intermédiaire définissant conjointement un dispositif d'accouplement du type précité.

Des objets, caractéristiques et avantages de la présente invention ressortiront de la description qui va suivre faite en regard des dessins annexés sur lesquels :

- la figure 1 est une vue en coupe axiale d'un dispositif d'accouplement selon l'invention;
- la figure 2 est une vue en coupe transversale selon la ligne II-II de la figure 1;
- la figure 3 est une vue en coupe axiale d'un dispositif d'accouplement selon une variante de réalisation;
- la figure 4 est une vue en coupe transversale selon la ligne brisée IV-IV de la figure 3;
- la figure 5 est une vue en coupe axiale selon la ligne V-V de la figure 6 d'un dispositif d'accouplement selon un autre mode de réalisation;
- la figure 6 est une vue en coupe transversale selon la ligne VI-VI de la figure 5;
- la figure 7 est une vue en coupe axiale d'un autre dispositif d'accouplement selon l'invention;
- la figure 8 en est une vue en coupe transversale selon la ligne II-II de la figure 7; et
- la figure 9 en est une vue en coupe selon la ligne III-III de la figure 7.

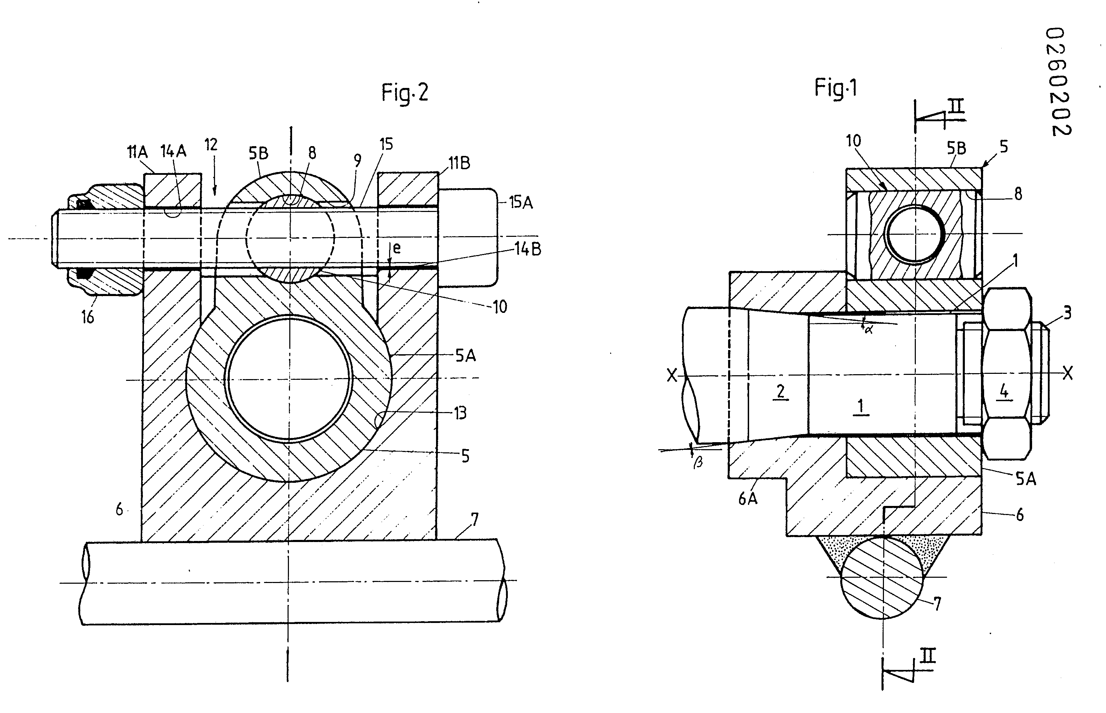

Les figures 1 et 2 représentent un dispositif d'accouplement, selon une forme de réalisation préférentielle de l'invention, qui est monté sur la partie terminale cannelée 1 d'une colonne de direction : cette dernière se raccorde au reste de la colonne, dans l'exemple considéré, par une portée tronconique 2 de demi-angle au sommet et est terminée par une portion filetée 3 destinée à recevoir un écrou de blocage 4.

Sur cette partie cannelée 1 est montée une pièce intermédiaire 5 engagée dans un moyeu 6. Ce moyeu fait ici partie d'un volant de direction dont seule une barre 7, de liaison à un cercle de manipulation, est représentée. Ce moyeu 6 comporte une portion tronconique 6A adaptée à être pressée axialement, par l'écrou de blocage 4, contre la portée tronconique 2 de la colonne de direction.

Le demi-angle au sommet de cette portion intérieurement tronconique est avantageusement inférieur à grâce à quoi un alignement optimum du moyeu sur la colonne de direction peut être obtenu.

La pièce intermédiaire 5 comporte un manchon 5A cannelé intérieurement, destiné à être calé en rotation sur la partie 1, prolongé radialement par une oreille 5B dans laquelle est ménagé un logement cylindrique 8 d'axe parallèle à l'axe de rotation. Ce logement est traversé par un alésage transversal 9.

Dans ce logement 8 est monté un écrou cylindrique 10, d'axe parallèle à l'axe de rotation, qui peut coulisser en rotation.

Le moyeu 6 a une forme générale en U avec une portion centrale, solidaire de la barre 7 du volant, raccordée à deux flancs 11A et 11B délimitant conjointement une fente 12 dont le fond est formé par une surface cylindrique 13 s'étendant sur un secteur angulaire de plus de 180°. Dans cette fente est ainsi maintenue radialement, avec possibilité de débattement en rotation, le manchon 5A de la pièce intermédiaire.

Dans les flancs 11A et 11B sont ménagés deux alésages canaux coaxiaux 14A et 14B dans lesquels une vis 15 est engagée avec un débattement latéral e transversalement à l'axe (dans le plan de la figure 2). Ces alésages peuvent être ovalisés transversalement à l'axe de rotation, ou même être cylindriques (avec pour la vis un jeu parallèle à cet axe).

Cette vis est maintenue longitudinalement dans le moyeu par sa tête 15A et par un écrou 16.

Le réglage angulaire du moyeu 6 par rapport à la pièce intermédiaire 5, et donc du volant par rapport à la colonne de direction, après simple déblocage de l'écrou de serrage 4 (sans qu'il soit nécessaire que celui-ci soit déposé), est effectué par rotation de la vis 15 dans l'écrou 10. Cela provoque une translation de l'écrou cyclindrique 10 le long de cette vis, ce qui provoque à son tour une rotation du manchon 5A de la pièce intermédiaire dans le fond 13 de la fente 12 du moyeu.

Une éventuelle variation de la distance de la vis 15 à l'axe de rotation du volant est rendue possible par le jeu latéral avec lequel elle est engagée dans les alésages 14A et 14B.

A la figure 1 l'écrou de serrage 4 appuie axialement sur la tranche du manchon 5A, lequel appuie axialement à son tour, par son autre tranche, sur la portion intérieurement tronconique 6A du moyeu. Cela assure, lorsque cet écrou est resserré, une bonne immobilisation en rotation du moyeu par rapport à la pièce intermédiaire 5.

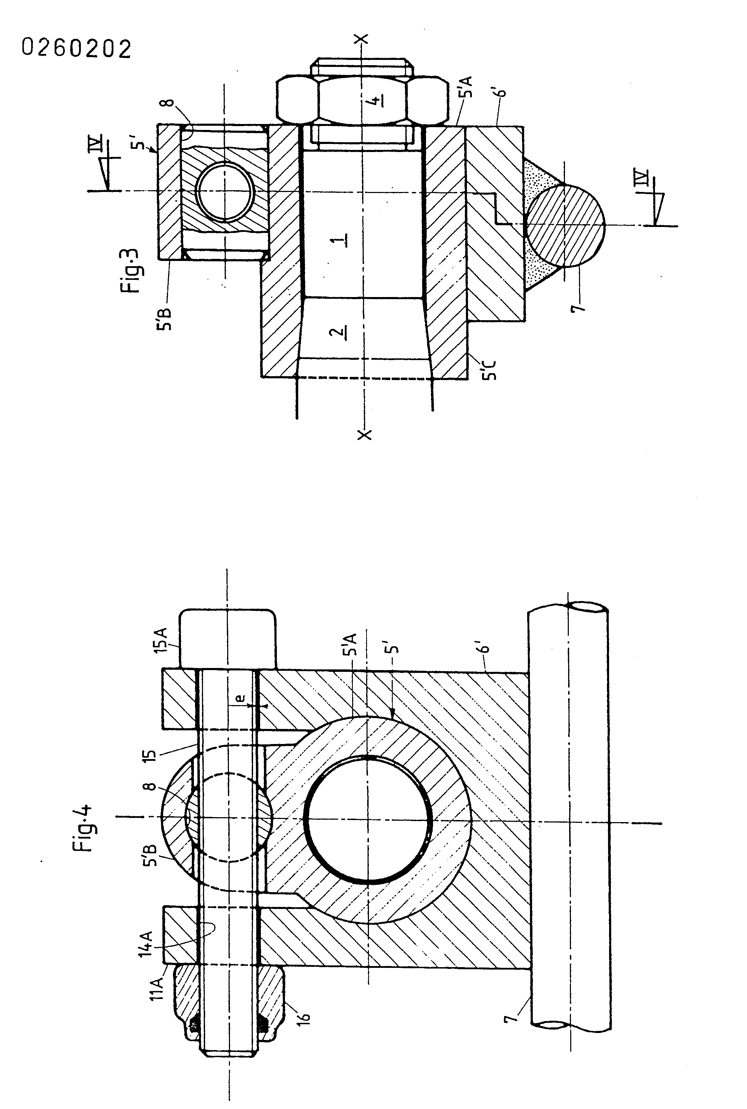

En variante représentée aux figures 3 et 4, sur lesquelles des éléments identiques à des éléments du mode de réalisation des figures 1 et 2 portent des signes de références identiques, la pièce intermédiaire 5' comporte une portion tronconique 5'C adaptée à être pressée axialement contre la partie tronconique 2 de la colonne de direction. Le moyeu 6 est alors dans sa totalité disposé radialement à l'extérieur de la pièce intermédiaire. Après serrage de l'écrou 4, une bonne immobilisation en rotation du moyeu par rapport à la pièce intermédiaire reste assurée du fait de l'immobilisation en rotation de la vis 15.

Les portions 6A et 5'C sont ici de forme extérieure carrée.

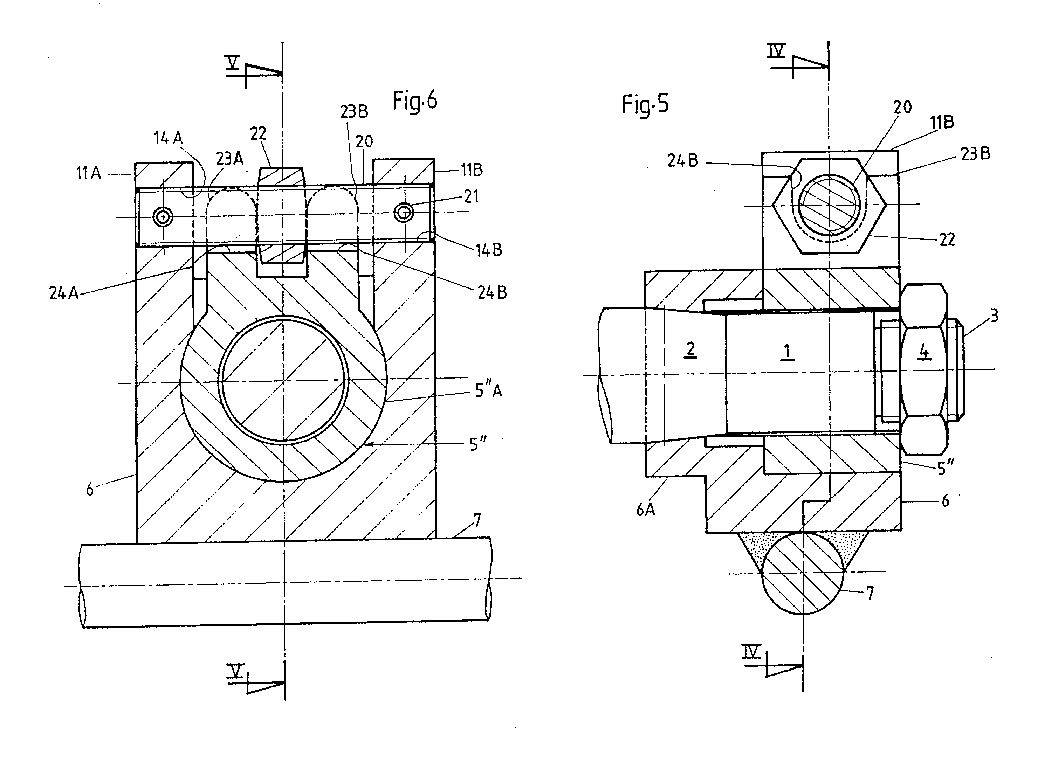

Les figures 5 et 6 représentent un autre mode de réalisation d'un dispositif d'accouplement selon l'invention, qui diffère du mode de réalisation des figures 1 et 2 en ce qu'il comporte une vis 20 attelée, longitudinalement et en rotation, au moyeu 6 (ici par des pions 21) ainsi qu'un écrou 22 adapté à tourner autour de la vis en glissant entre des portées transversales à la vis ménagées sur des ailes parallèles 23A et 23B de la pièce intermédiaire 5''.

Dans ces ailes sont découpées des échancrures 24A et 24B traversées par la vis 20.

Le réglage angulaire se fait ici, après déblocage de l'écrou 4, par rotation de l'écrou 22.

Cet écrou est ici un écrou à six pans. Dans un mode de réalisation non représenté cet écrou est une molette destinée à être manipulée manuellement.

Cet écrou est avantageusement bombé (voir la figure 6), ce qui facilite son glissement entre les ailes 23A et 24B.

A titre d'ordre de grandeur, un dispositif d'accouplement du type représenté aux figures 1 et 2, ou 3 et 4, assure un ajustement en rotation du moyeu par rapport à la pièce intermédiaire, et donc du volant par rapport à la colonne de direction jusqu'à une dizaine de degrés, ce qui permet aisément de rattraper au moins l'écartement angulaire qui existe classiquement entre les cannelures axiales d'une colonne de direction.

D'autre part un dispositif d'accouplement du type précité peut se monter sur une colonne sans portée tronconique mais avec un simple épaulement : il suffit de modifier en conséquence le profil de la partie 6A ou 5'C.

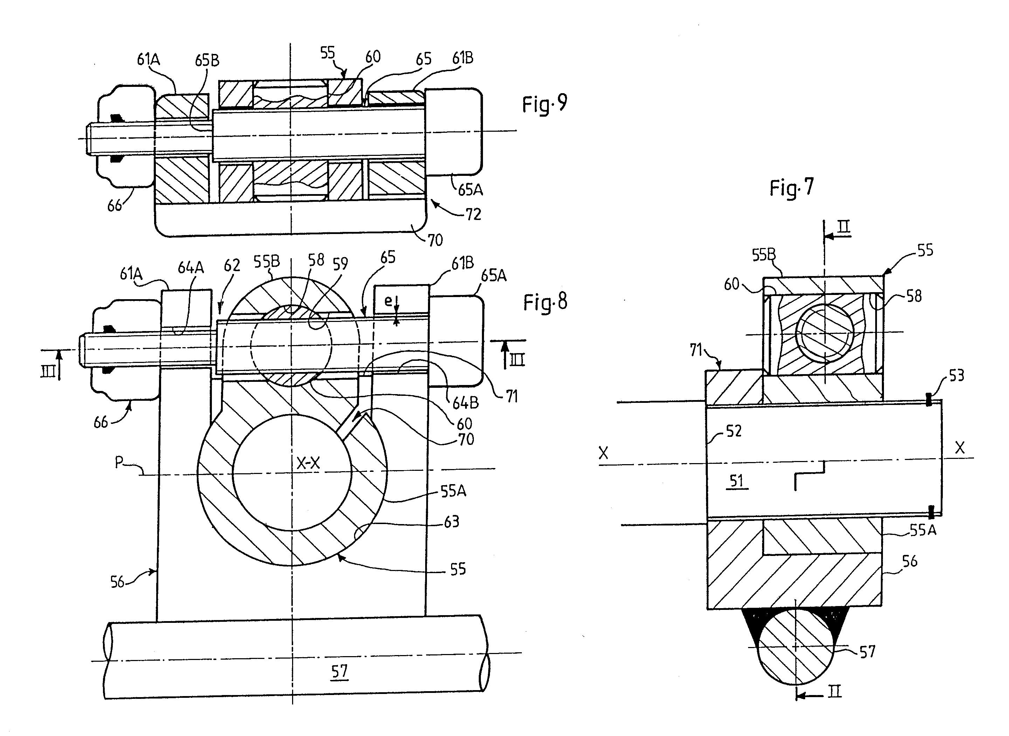

Les figures 7 à 9 représentent un autre dispositif d'accouplement qui est monté sur la partie terminale cannelée 51 d'une colonne de direction d'axe X-X. Cette partie 51 se raccorde ici par une partie transversale 52 au reste de la colonne. Un circlips 53 est destiné à empêcher l'échappement du dispositif vis-à-vis de cette partie 51.

Sur cette partie cannelée 51 est montée une pièce intermédiaire 55 engagée dans un moyeu 56. Ce moyeu fait ici partie d'un volant de direction dont seule une barre 57, de liaison à un cercle de manipulation, est représentée.

La pièce intermédiaire 55 comporte un manchon 55A cannelé intérieurement, destiné à être calé en rotation sur la partie 51, prolongé radialement par une oreille 55B dans laquelle est ménagé un logement cylindrique 58 d'axe parallèle à l'axe de rotation. Ce logement est traversé par un alésage 59 qui lui est perpendiculaire.

Dans ce logement 58 est monté un écrou cylindrique de réglage 60, d'axe parallèle à l'axe de rotation, qui peut coulisser en rotation.

Le moyeu 56 comporte une partie en U avec une portion centrale, solidaire de la barre 57 du volant, raccordée à deux flancs 61A et 61B délimitant conjointement une fente 62 dont le fond est formé par une surface cylindrique 63 s'étendant sur un secteur angulaire de plus de 180°. Dans cette fente est ainsi maintenue radialement, avec possibilité de débattement en rotation, le manchon 55A de la pièce intermédiaire.

Dans les flancs 61A et 61B sont ménagés deux alésages (canaux) coaxiaux 64A et 64B dans lesquels une vis 65 est engagée avec un débattement latéral e transversalement à l'axe (dans le plan de la figure 8). Ces alésages peuvent être ovalisés transversalement à l'axe de rotation, ou même être cylindriques (avec pour la vis un jeu parallèle à cet axe).

Cette vis est maintenue longitudinalement dans le moyeu par sa tête 65A et par un écrou de serrage 66 (écrou-frein).

Le manchon 55A présente une fente longitudinale 70, ici au voisinage de l'oreille 55B, à l'extérieur de la surface cylindrique 63 de la pièce en U tandis que l'un au moins des flancs 61A et 61B est adapté à se rapprocher élastiquement de l'autre en sorte de comprimer radialement le manchon 55A autour de la partie filetée 51 de la colonne de direction. Plus précisément, dans l'exemple considéré le flanc 61B est séparé d'une plaque transversale 71 du moyeu 56 par une fente 72 qui longe ce flanc sur une distance suffisante pour permettre un rapprochement élastique des branches du U constituées par ces flancs, et une restriction en rayon du fond cylindrique 63 : de par sa propre élasticité le manchon 55A peut subir en conséquence une restriction en rayon autour de la partie 51, avec compression radiale ou pincement de cette dernière.

En pratique, la fente 72 s'étend au moins jusqu'à la surface 63 formant le fond de la pièce en U, de préférence jusqu'à proximité d'un plan P contenant l'axe X-X et parallèle à la vis 65.

Selon une disposition avantageuse de l'invention la vis 65 comporte une brusque réduction de rayon à proximité de la branche du U sur laquelle appuie l'écrou de serrage, et on tire profit de la portée transversale 65B ainsi formée pour limiter le débattement en flexion élastique des branches du U, le flanc 61A comportant un alésage 64A de moindre rayon que l'alésage 64B : lors du vissage de l'écrou 66, la venue en butée de la portée 65B contre le flanc 61A se traduit par une limitation de la flexion relative subie par les flancs à une valeur acceptable. Cette portée limite le couple de serrage.

Le réglage angulaire du moyeu 56 par rapport à la pièce intermédiaire 55, et donc du volant par rapport à la colonne de direction, est effectué par rotation de la vis 65 dans l'écrou 60. Cela provoque une translation de l'écrou cylindrique 60 le long de cette vis, ce qui provoque à son tour une rotation du manchon 55A de la pièce intermédiaire dans le fond 63 de la fente 62 du moyeu.

Une éventuelle variation de la distance de la vis 65 à l'axe de rotation X-X du volant est rendue possible par le jeu latéral avec lequel elle est engagée dans les alésages 64A et 64B.

Au terme de cette phase de réglage angulaire, on effectue une immobilisation longitudinale du moyeu par rapport à la colonne de direction, par rotation de l'écrou de serrage 66 sur la vis 65.

Il y a donc mouvement relatif vis 65/écrou 60 pour le réglage angulaire puis, indépendamment du premier, mouvement relatif écrou 66/vis 65 pour l'immobilisation axiale.

Il va de soi que la présente invention ne se limite pas au mode de réalisation décrit et représenté sur les figures, mais englobe toutes les variantes que l'homme de l'art pourra déterminer. Ainsi notamment la forme du moyeu peut être aménagée jusqu'à par exemple, masquer complètement la pièce intermédiaire.

## Revendications

1. Dispositif d'accouplement en rotation de deux éléments coaxiaux autour d'un axe commun comportant un moyeu (6, 6'56) solidaire de l'un (7,57) des éléments et une pièce intermédiaire (5,5'5'',55) de liaison en rotation de ce moyeu à l'autre (1,51) de ces éléments, caractérisé en ce que, le moyeu et la pièce intermédiaire étant attelés axialement l'un à l'autre et la pièce intermédiaire étant adaptée à être calée en rotation sur ledit autre élément, il comporte une vis transversale (15,20,65) maintenue longitudinalement dans le moyeu, radialement à distance de l'axe commun, et un écrou (10,22,60) engagé sur cette vis qui est attelé à la pièce intermédiaire parallèlement à cette vis.

2. Dispositif d'accouplement selon la revendication 1, caractérisé en ce que la vis (15,65) est montée dans le moyeu avec un débattement latéral (e) transversalement à l'axe commun.

3. Dispositif d'accouplement selon la revendication 1 ou la revendication 2, caractérisé en ce que l'écrou (10,60) est un cylindre d'axe parallèle à l'axe commun, coulissant en rotation dans un logement cylindrique (8,58) de la pièce intermédiaire traversé par un alésage (9,59) dans lequel la vis (15,65) est engagée avec jeu.

4. Dispositif d'accouplement selon la revendication 3, caractérisé en ce que la pièce intermédiaire (5,55) comporte un manchon (5A) cannelé intérieurement, destiné à être calé en rotation sur une portion cannelée (1,51) dudit autre élément, prolongé radialement par une oreille (5B,55B) dans laquelle est ménagé ledit logement (8,58).

5. Dispositif d'accouplement selon la revendication 3 ou la revendication 4, caractérisé en ce que le logement (8,58) est un alésage traversant axialement ladite oreille (5B,55B).

6. Dispositif d'accouplement selon l'une quelconque des revendications 1 à 5, caractérisé en ce que le moyeu (6) comporte une portion tronconique (6A) adaptée à être pressée axialement contre une portée tronconique (2) dudit autre élément.

7. Dispositif d'accouplement selon l'une quelconque des revendications 1 à 5, caractérisé en ce que la pièce intermédiaire (5') comporte une portion tronconique (5'C) adaptée à être pressée axialement contre une portée tronconique (2) dudit autre élément.

8. Dispositif d'accouplement selon la revendication 6 ou la revendication 7, caractérisé en ce que la portion tronconique est d'un angle ($\beta$) plus aigu que l'angle ($\alpha$) de la partie tronconique.

9. Dispositif d'accouplement selon la revendication 1, caractérisé en ce que la vis (20) est attelée longitudinalement et en rotation au moyeu.

10. Dispositif d'accouplement selon la revendication 1, caractérisé en ce que l'écrou (22) est engagé entre des portées transversales à la vis ménagées sur des ailes parallèles (23A,23B) de la pièce intermédiaire (5'').

11. Dispositif d'accouplement selon la revendication 10, caractérisé en ce que l'écrou est bombé.

12. Dispositif selon l'une quelconque des revendications 1 à 5 caractérisé en ce que, la pièce intermédiaire comportant un manchon élastique fendu (55A) entourant ledit autre élément (51) et engagé dans une pièce élastique en U faisant partie du moyeu (56), et la vis (65) traversant les extrémités des branches de cette pièce en U, un écrou de serrage (66) est engagé sur cette vis ( 65) à l'opposé de la tête (65A) de cette dernière, en sorte qu'un vissage de cet écrou de serrage sur la vis provoque une compression radiale de la pièce en U sur le manchon fendu et donc une compression radiale de ce dernier sur ledit autre élément.

13. Dispositif d'accouplement selon la revendication 12, caractérisé en ce que la pièce élastique en U comporte une portion centrale solidaire du premier élément (57) entourant le manchon sur plus de 180° et raccordée à deux flancs (61A,61B) traversés en leurs extrémités par ladite vis, l'un au moins de ces flancs étant longé par une fente (72) le séparant du reste du moyeu.

14. Dispositif d'accouplement selon la revendication 12 ou la revendication 13, caractérisé en ce que le manchon comporte une fente (70) à l'extérieur du fond de la pièce en U, au voisinage d'une oreille de ce manchon recevant l'écrou de réglage (60).

15. Dispositif d'accouplement selon l'une quelconque des revendications 12 à 14, caractérisé en ce que la vis (65) comporte une portée (65B) de limitation de couple de serrage adaptée à venir en butée contre le flanc (6A) situé à proximité de l'écrou de serrage (66) à l'opposé de ce dernier.

16. Volant de direction comportant un moyeu (6), relié à un cercle destiné à être manipulé par un conducteur, et une pièce intermédiaire (5) de liaison à une extrémité cannelée (1) d'une colonne de direction, ce moyeu et cette pièce intermédiaire définissant conjointement un dis-

**0 260 202**

positif d'accouplement conforme à l'une quelconque des revendications 1 à 15.

0260202

Fig·1

Fig·2

0260202

Fig·4

11A   14A   5'B   8   15        15A

16

5'A

5'

6'

7

e

Fig·3

IV

5'B   5'

8

X   2   1   4   X

5'C   5'A

6'

7

IV

Fig.5

Fig.6

Fig·9

61A  65B        55  60  65  61B

66                    65A
                      72
                      70

Fig·7

61A  64A  62  55B  58  59  65  61B  65A

66                          64B  71
                            60
                            70

55B        55
60         58

71         53

X  52  X
   51

P        X-X

55A
63

55        56

56                      57

57
Fig·8

II

III

III

e

II

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 867 461 (KAHN) <br> * En entier * | 1-3,5 | F 16 D 1/12 <br> B 62 D 1/10 <br> F 16 D 1/08 |
| Y | | 6,9,12, 16 | |
| D,Y | EP-A-0 148 794 (ECKENDORF) <br> * En entier * | 6,16 | |
| Y,A | US-A-3 171 611 (SCHULTZ) <br> * Colonnes 5,6; figures 15,16 * | 9 | |
| A | | 1 | |
| Y | GB-A- 305 281 (STONE & CO.) <br> * En entier * | 12 | |
| X | GB-A- 932 029 (SIEMAG) <br> * En entier * | 1,4,9 | |
| X | FR-A-1 072 242 (DAIMLER-BENZ) <br> * En entier * | 1,2,9 | |
| X | FR-A- 430 432 (SOCIETE LEFLAIVE) <br> * En entier * | 1 | DOMAINES TECHNIQUES RECHERCHES (Int. Cl.4) |
| A | CH-A- 86 900 (SCINTILLA) | | F 16 D 1/00 <br> B 62 D |

Le présent rapport a été établi pour toutes les revendications

| Lieu de la recherche | Date d'achèvement de la recherche | Examinateur |
|---|---|---|
| LA HAYE | 03-12-1987 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                   

& : membre de la même famille, document correspondant

EPO FORM 1503 03.82 (P0402)